(19) Europäisches Patentamt / European Patent Office / Office européen des brevets

(11) **EP 2 500 899 B1**

(12) **EUROPEAN PATENT SPECIFICATION**

(45) Date of publication and mention
of the grant of the patent:
**08.11.2017 Bulletin 2017/45**

(51) Int Cl.:
*G09G 3/36* (2006.01)     *G02F 1/13* (2006.01)
*G06T 3/40* (2006.01)     *G09G 3/20* (2006.01)
*G09G 5/00* (2006.01)     *G09G 5/391* (2006.01)
*H04N 1/387* (2006.01)     *H04N 5/66* (2006.01)
*G09G 5/20* (2006.01)

(21) Application number: **12171736.7**

(22) Date of filing: **30.08.2006**

(54) **Image displaying apparatus and image display program**

Bildanzeigevorrichtung und Bildanzeigeprogramm

Appareil d'affichage d'image et programme d'affichage d'image

(84) Designated Contracting States:
**DE FR GB**

(43) Date of publication of application:
**19.09.2012 Bulletin 2012/38**

(62) Document number(s) of the earlier application(s) in
accordance with Art. 76 EPC:
**06797016.0 / 2 058 793**

(73) Proprietors:
• **JVC KENWOOD Corporation**
**Kanagawa 221-0022 (JP)**
• **National University Corporation Nagoya**
**University**
**Nagoya-shi, Aichi 464-8601 (JP)**

(72) Inventors:
• **Ichikawa, Katuhiro**
**Ichinomiya-shi, Aichi 494-0006, (JP)**
• **Kodera, Yoshie**
**Nagoya-shi, Aichi 464-8601, (JP)**
• **Hayashi, Shigeo**
**Ueda-shi, Nagano 386-0192 (JP)**
• **Naganuma, Tatumi**
**Ueda-shi, Nagano 386-0192 (JP)**

(74) Representative: **Addiss, John William et al**
**Mewburn Ellis LLP**
**City Tower**
**40 Basinghall Street**
**London EC2V 5DE (GB)**

(56) References cited:
**EP-A- 1 239 447        US-A- 5 912 710**
**US-A1- 2005 264 587**

**Description**

The present invention relates to an image displaying apparatus and an image display program and more particularly to an image displaying apparatus and an image display program arranged for driving the sub pixels independently in its LCD (liquid crystal display) to improve the resolution along the major axis of the LCD and displaying a reduced image while maintaining the aspect ratio of an original image.

An image reducing method is known for reducing a great number of pixels in an image through simple sampling or operation sampling to produce an image of a small number of pixels (see Patent citation 1).

Meanwhile, a displaying apparatus is known which drives the three sub pixels of each pixel independently In its LCD (See Patent citation 2).

Patent Citation 3 discloses a display having two regions, one coloured region having sub-pixels which make up full coloured pixels and another region being monochromatic and having pixels of the same size as the colour sub-pixels.

Patent Citation 1: JP (Heisei)10-327402A
Patent Citation 2: JP 2003-228337A
Patent Citation 3: EP1239447 A1

There is a demand, for example, for displaying a medical image recorded with an FPD (flat panel detector) of 4096×3328 pixel type on an LCD of 1600×1200 pixel type.

Using the image reduction method of Patent Citation 1, a medical image of 4096×3328 pixels produced by the FPD Is reduced to an image of 1477×1200 which can thus be displayed on the LCD of 1600×1200 pixel type. The number of pixels along the minor axis in the reduced image is set to 1200 because it corresponds to the number of pixels along the minor axis on the LCD. The number of pixels along the major axis in the reduced image is set to 1477 because the aspect ratio of the original image has to be maintained.

Unfortunately, since the original image along either of the major axis and the minor axis is reduced from 2.774 (=4096/1477/1200) pixels to one pixel for the LCD, its resolution will significantly be declined.

More specifically, it is essential for the diagnosis of breast cancer to identify a tiny pathological sign such as calcopherite of not greater than 100 $\mu$m. As the pitch of its pixels is generally 70 $\mu$m, the FPD has a desired degree of the resolution. However, since the pitch of pixels on LCD is equivalent to 194 (=70*2.774) $\mu$m of the pitch of pixels on the FPD, a desired degree of the resolution will hardly be maintained.

Each pixel on the LCD of the monochrome liquid crystal display consists of three sub pixels aligned along the major axis of the LCD. The resolution along the major axis on the LCD can thus be improved by driving independently the three sub pixels such as in the display of Patent Citation 2.

However, while the sub pixels are commonly rectangular in the shape, the image reducing method of patent Citation 1, of which the shape of the pixels is square or circular falls to maintain the aspect ratio of the original image at the display.

As a first aspect of the present invention, an image displaying apparatus is provided comprising: an image converting means adapted to convert original monochrome image data which consists of an array, m rows and n columns, of pixels into a display image which consists of an array, q rows and (3*n*q/m), columns, of pixels where m, n and q are natural numbers and m≤n and m>q are given; and a monochrome liquid crystal display provided with a monochrome LCD, composed of an array, of pixels of square shape, each pixel consisting of three sub pixels aligned along the row of monochrome LCD, for driving the sub pixels independently to display the display image data on the LCD, wherein the image converting means comprises; a weighted averaging means adapted to weighted average a plurality of adjacent pixel data of the original monochrome image data along the column direction and generate weighted average image data, so that m pixels along the column direction of the original monochrome image data is maintained; an interpolating and reducing means adapted to interpolate and reduce pixel data of the weighted average image data along the column direction, so that the weighted average image data having m pixels along the column direction is converted into interpolated intermediate image data having q pixels along the column direction; and an interpolating means adapted to interpolate pixel data of the interpolated intermediate image data along the row direction, so that the interpolated intermediate image data having n pixels along the row direction is converted into the display image data having (3*n*q/m) pixels along the row direction.

The image displaying apparatus of the first aspect reduces and converts the original monochrome image which consists of an array, m rows and n columns, of pixels into a display image which consists of an array, q rows and (3*n*q/m) columns, of pixels. As the number of pixels along the row of the original monochrome image Is (n*q/m) at the aspect ratio (n/m), the number of pixels along the row in the display image is three times greater than that of the original monochrome image at the aspect ratio (n/m) of the original monochrome image. With the three sub pixels of each pixel on the monochrome LCD aligned along the row and driven independently to display the display image, the number of pixels along the row on the monochrome LCD is expressed by (3*n*q/m)/3= (n*q/m). Accordingly, the aspect ratio of the display image Is (n*q/m)/q=(n/m). In other words, the aspect ratio of the original image can be maintained.

The resolution along the row Is hence three times higher than that when the sub pixels are driven not independently. The pitch of the sub pixels on the LCD is equal at the conversion to n/(3*n*q/m)=m/(3*q) times greater than the pitch of the pixels on the FPD in view of the conversion into the pitch of pixels on the FPD. When the pitch of the pixels on the FPD is 70μm with m=3328 and q=1200, for example, the pitch of the sub pixels on the LCD is equal to 65(=70*3328/(3* 1200)) μm for the pitch of the pixels on the FPD in view of the conversion. Accordingly, the resolution of 100 pm needed for examining breast cancers can be achieved.

As a second aspect of the present invention, an image display program, which maintains the aspect ratio of an original monochrome image, for displaying original monochrome image data which consists of an array, m rows and n columns, of pixels on a monochrome LCD, of a monochrome liquid crystal display which is composed of an array, of pixels of square shape, each pixel consisting of three rectangular sub pixels aligned along the row of monochrome LCD for driving the sub pixels independently to display display image dataon the LCD where m, n and q are natural numbers and m≤n, and m>q are given, allowing a computer to act as an original monochrome image inputting means adapted to input the original monochrome image data from the outside, an image converting means adapted to convert the original monochrome image data into display image data which consists of an array, q rows and (3*n*q/m) columns, of pixels, and a display image outputting means adapted to output the display image data to the monochrome liquid crystal display in order to display the display image data through independently driving the sub pixels of the monochrome LCD, wherein the image converting means comprises; a weighted averaging means adapted to weighted average a plurality of adjacent pixel data of the original monochrome image data along the column direction and generate weighted average image data, so that m pixels along the column direction of the original monochrome image data is maintained; an interpolating and reducing means adapted to interpolate and reduce pixel data of the weighted average image data along the column direction, so that the weighted average image data having m pixels along the column direction is converted into interpolated intermediate image data having q pixels along the column direction; and an interpolating means adapted to interpolate pixel data of the interpolated intermediate image data along the row direction, so that the interpolated intermediate image data having n pixels along the row direction is converted into the display image data having (3*n*q/m) pixels along the row direction.

The image display program of the second aspect reduces and converts the original monochrome image which consists of an array, m rows and n columns, of pixels into a display image which consists of an array, q rows and (3*n*q/m) columns, of pixels. As the number of pixels of the original monochrome Image is (n*q/m) at the aspect ratio (n/m), the number of pixels along the row in the display image is three times greater than that of the original monochrome image. With the three sub pixels of each pixel on the monochrome LCD aligned along the row and driven independently to display the display image, the number of pixels along the row on the monochrome LCD is expressed by (3*n*q/m)/3=(n*q/m). Accordingly, the aspect ratio of the display image is (n*q/m)/q=(n/m). In other words, the aspect ratio of the original image can be maintained.

The resolution along the row is hence three times higher than that when the sub pixels are driven not independently. The pitch of the sub pixels on the LCD is equal to n/(3*n*q/m)=m/(3*q) times greater than the pitch of the pixels on the FPD in view of the conversion into the pitch of pixels on the FPD. When the pitch of the pixels on the FPD is 70 μm with m=3328 and q=1200, for example, the pitch of the sub pixels on the LCD is equal to 65(=70*3328/(3*1200)) μm for the pitch of the pixels on the FPD in view of the conversion. Accordingly, the resolution of 100 μm needed for examining breast cancers can be achieved.

(Advantages of the Invention)

The image displaying apparatus and the image display program according to the present invention allow the image to be reduced from an original image with the aspect ratio remaining unchanged and displayed on the LCD while the resolution along the major axis is improved.

**Best Modes for embodying the Invention**

The present invention will be described in more detail referring to one preferred embodiment shown in the relevant drawings. It would be understood that the present invention is not limited to the embodiments.

(Embodiment 1)

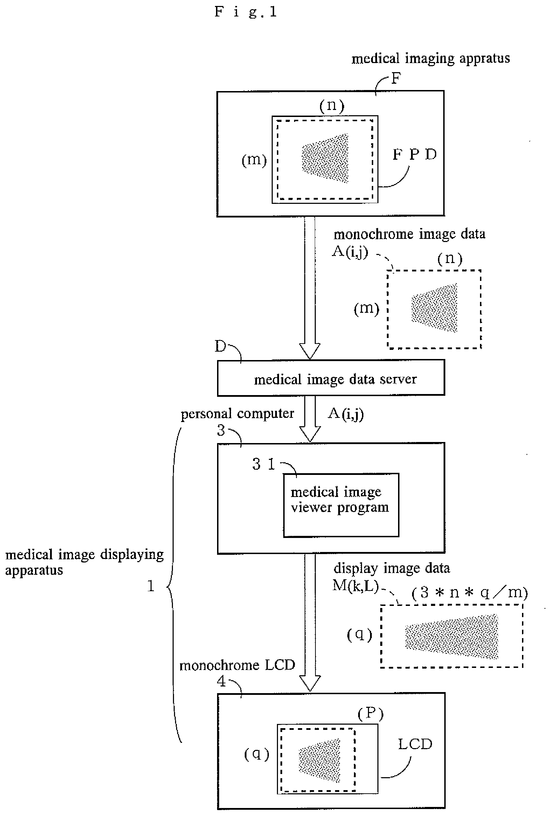

Fig. 1 is a schematic view of a medical image displaying apparatus 1 illustrating Embodiment 1.

The medical Image displaying apparatus 1 comprises a personal computer 3 for carrying out a medical image viewer program 31 where, when m≤n, q<P, n/m<P/q, and m>q where m, n, q, and P are natural numbers, a monochrome medical image data A(i, j) which consists of an array, m rows and n columns, of pixels is entered and converted into a display image data M(k, L) which consists of a reduced array, q rows and (3*n*q/m) columns, of pixels and a monochrome liquid crystal display 4 equipped with a monochrome LCD panel which Is composed mainly of an array, q rows and P columns, of pixels for displaying the display image data M(k, L) through independently driving the sub pixels aligned along the rows of the monochrome LCD panel.

The monochrome medical image data A(i, j) has been recorded with an FPD in a medical imaging apparatus F which consists of an array, m rows and n columns, of pixels and saved in a medical image data server D.

When m<n, the major axis of the medical image data A(i, j) is commonly determined to extend along the up-and-down direction of a subject to be examined thus allowing the major axis of the LCD to extend along the up-and-down direction. It is however assumed for ease of the description that both the medical image data A(i, j) and the LCD are extended longer along the horizontal direction.

Fig. 2(a) illustrates a numerical example of the monochrome medical image data A(i, j) where m=3328 and n=4096.

Fig. 2(b) illustrates a numerical example of the LCD where q=1200 and P=1600.

Fig. 3 is an explanatory view showing the relationship between the LCD and the display image data M(k, L).

As n/m<P/q is given, the monochrome medical image data A(i, j) is reduced so that the minor axis of the LCD extends along the minor axis of the display image data M(k, L). When the aspect ratio n/m of the monochrome medical image data A(i, j) is maintained, the number p of pixels along the major axis of the display image data M(k, L) becomes smaller than the number P of pixels along the major axis of the LCD.

For example, with m=3328, n=4096, q=1200, and P=1600, p=4096*1200/3328=1477 is established.

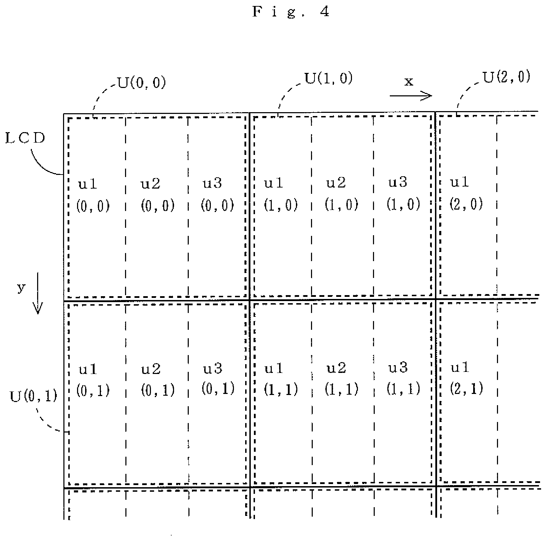

As shown in Fig. 4, each pixel U in the LCD consists of three sub pixels u1, u2, and u3 aligned along the major axis of the LCD. Since the pixel U is arranged of a square shape, the shape of the sub pixels u1, u2, and u3 is rectangular.

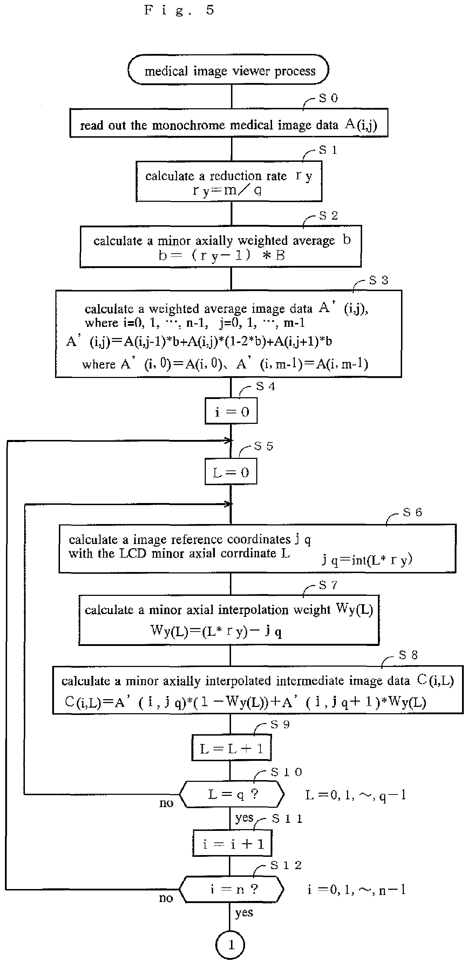

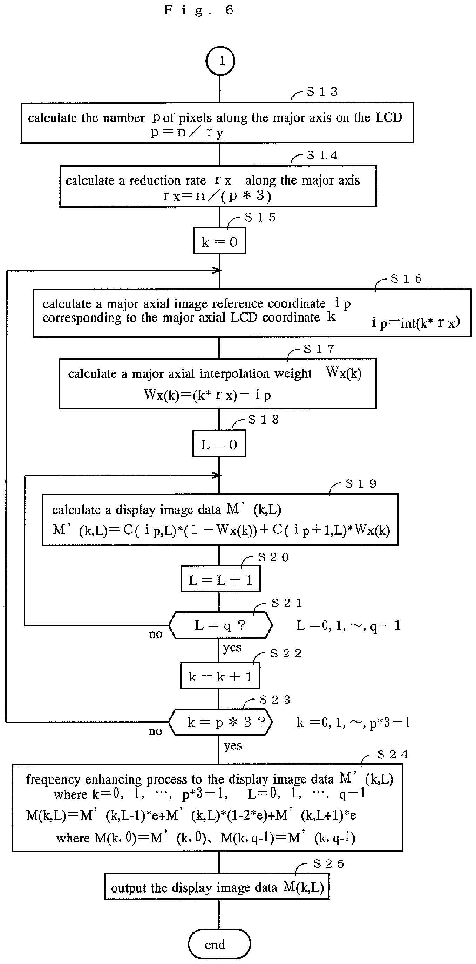

Figs. 5 and 6 are flowcharts showing procedures of a medical image viewer process of the medical image view program 31 in the personal computer 3.

At Step S0, the monochrome medical image data A(i, j) comprising an array, m rows and n columns, of pixels is read out from the medical image data server 2.

At Step S1, a reduction rate ry=m/q along the minor axis is calculated from the number m of pixels along the minor axis of the monochrome medical image data A(i, j) and the number q of pixels along the minor axis on the LCD. For example, ry=2.774 is given with m=3328 and q=1200.

At Step S2, a minor axially weighted average weight b=(ry-1)*B is calculated from the reduction rate ry along the minor axis and an adjusting factor B. For example, b=0.2129 is given when ry=2.774 and B=0.12. This allows an operator to control the appearance (with image noises) of the display image through adjusting the adjusting factor B.

At Step S3, a weighted average image data A'(i, j) which is a result of weighted averaging the medical image data A(i, j) along the minor axis is calculated from the medical image data A(i, j) and the minor axially weighted average weight b so that all the pixels of the medical image data A(i, j) appear in the display image.

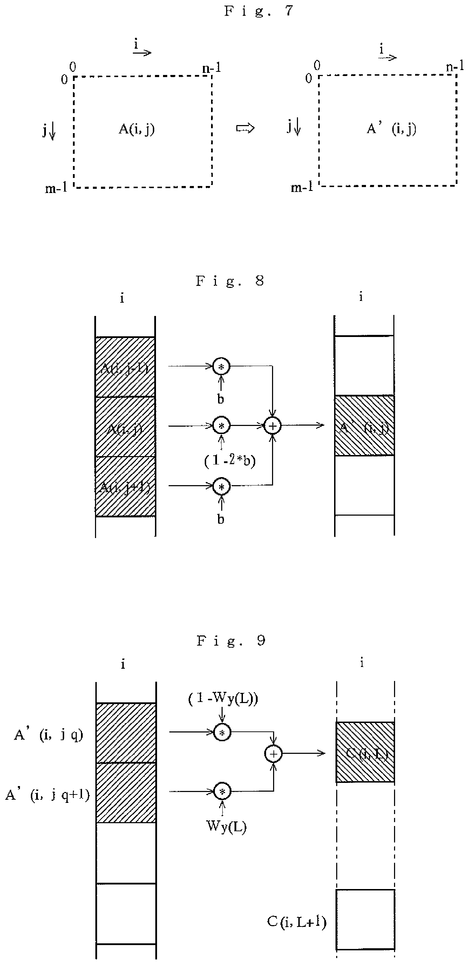

Fig. 7 illustrates structural concepts of the medical image data A(i, j) and the minor axially weighted average image data A'(i, j).

As apparent from Fig. 8 and the following equation, the minor axially weighted average image data A'(i, j) is calculated by weighted averaging the three adjacent medical image data A(i, j-1), A(i, j), and A(i, j+1), because the minimum integer which is greater than the reduction rate ry=2.774 along the minor axis is 3.

$$A'(i, j)=A(i, j-1)*b+A(i, j)*(1-2*b)+A(i, j+1)*b$$

where A'(i, 0)=A(i, 0) and A'(i, m-1)=A(i, m-1).

$$i=0, 1,..., n-1, j=0, 1,..., m-1.$$

In common, when the integer which is greater than the reduction rate ry along the minor axis Is (2*g+1), the minor axially weighted average image data A'(i, j) Is calculated by weighted averaging the adjacent medical image data A(i,j-g),..., A(i, j+g). The minor axially weighted average weight may be determined depending on g.

At Step S4, the image column coordinate i is initialized to zero.

At Step S5, the LCD minor axial coordinate L is initialized to zero.

At Step S6, an image reference coordinates jq=int(L*ry) along the minor axis is calculated with the LCD minor axial coordinate L.

At Step S7, a minor axial Interpolation weight Wy(L)=(L*ry)-jq is calculated.

At Step S8, a minor axially Interpolated intermediate image data C(i, L) is calculated by linearly interpolating the minor axially weighted average image data A'(i, j) and the minor axial interpolation weight Wy(L) as shown in Fig. 9 and the following equation.

$$C(i, L)=A'(i, jq)*(1-Wy(L))+A'(I, jq+1)*Wy(L)$$

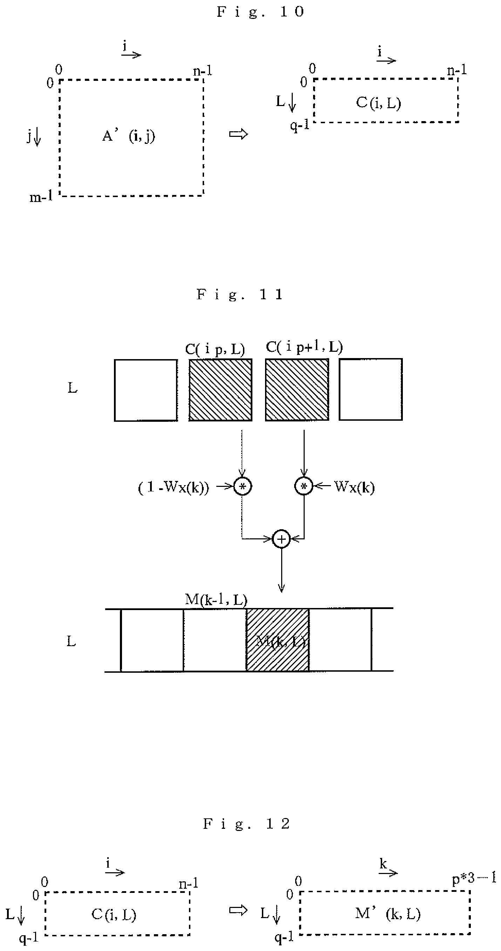

At Steps S9 and S10, the action at the steps S6 to S8 is repeated until L reaches (q-1).
At Steps S11 and S12, the action at the steps S5 to S10 is repeated until i reaches (n-1).
As described and shown in Fig. 10, the minor axially weighted average image data A'(i, j) is converted into the minor axially interpolated intermediate image data C(i, L).
Referring to Fig. 6, at Step S13, the number p=n/ry of pixels along the major axis of the LCD used for actually displaying along the major axis on the LCD is calculated. For example, p=1477 is established when n=4096 and ry=2.774.
At Step S14, a reduction rate rx=n/(p*3) along the major axis is calculated from the number (p*3) of sub pixels which is a result of multiplying the number p of pixels by three for independently driving the three sub pixels along the major axis in each pixel of the LCD. For example, rx=0.9244 is established when n=4096 and p=1477.
At Step S15, the LCD major axial coordinate k is initialized to zero.
At Step S16, a major axial Image reference coordinate ip=int(k*rx) corresponding to the major axial LCD coordinate k is calculated.
At Step S17, a major axial Interpolation weight Wx(k)=(k*rx)-ip is calculated.
At Step S18, the LCD minor axial coordinate L Is initialized to zero.
At Step S19, a display image data M'(k, L) is calculated by linearly interpolating the minor axially interpolate intermediate image data C(i, L) with the major axial interpolation weight Wx(k) as shown in Fig. 11 and the following equation.

$$M'(k, L)=C(ip, L)*(1-Wx(k))+C(ip+1, L)*Wx(k)$$

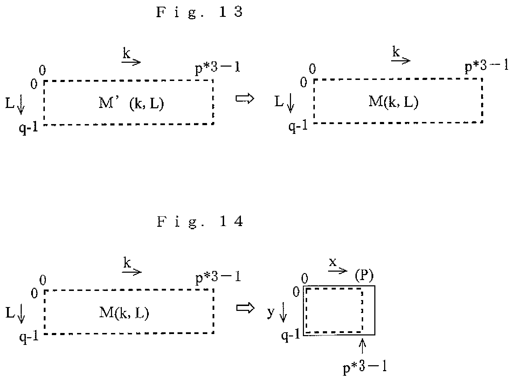

At Steps S20 and S21, the action at Step S19 is repeated until L reaches (q-1) before the procedure advances to Step S22.
At Steps S22 and S23, the action at the steps S16 to S21 is repeated until k reaches (p*3-1) before the procedure advances to Step S24. Accordingly, as shown in Fig. 12, the display image data M'(k, L) is obtained.
At Step S24, the display image data M'(k, L) is subjected to the frequency enhancing process by weighted calculation at three points for improving the resolution along the minor axis, thus calculating the final display image data M(k, L). Accordingly, the final display image data M(k, L) is obtained as shown in Fig. 13.

$$M(k, L)=M'(k, L-1)*e+M'(k, L)*(1-2*e)+M'(k, L+1)*e$$

where M(k, 0)=M'(k, 0), M(k, q-1)=M'(k, q-1), k=0, 1,..., p*3-1 and L=0, 1,..., q-1. Also, e is a weighted factor for use In the frequency enhancing process as ranging, for example, from -0.1 to -0.2 in view of the balance with the direction of the major axis and the impression of a displayed image.
At Step S25, the display image data M(k, L) Is transferred from the personal computer 3 to the monochrome liquid crystal display 4.
The monochrome liquid crystal display 4 drives the sub pixels of the LCD independently to display the display image data M(k, L) as shown in Fig. 14.
The advantages of the medical image displaying apparatus 1 with the medical image viewer program 31 of Embodiment 1 are as follows.

(1) The number of the sub pixels along the major axis of the LCD to be actually used for display is (p*3) which is equivalent to the number (n*q/m) of the pixels in view of the conversion into the number of pixels. Accordingly, the aspect ratio of the display Image is expressed by (n*q/m)/q=(n/m). More particularly, the aspect ratio of the medical image data A(i, j) can be maintained.

(2) The resolution along the major axis is three times greater than that when the sub pixels are driven not independently. The pitch of the sub pixels on the LCD is equal at the conversion to n/(3*n*q/m)=m/(3*q) times greater than the pitch of the pixels on the FPD in view of the conversion into the pitch of pixels on the FPD. For example, when the pitch of the pixels on the FPD is 70 μm with m=3328 and q=1200, the pitch of the sub pixels on the LCD is equal to 65 (=70*3328/(3*1200)) for the pitch of the pixels on the FPD in view of the conversion. Accordingly, the resolution of 100 μm needed for examining breast cancers can be achieved.

**Industrial Applicability**

The image displaying apparatus and the image display program according to the present invention can favorably be used for increasing the efficiency of the action of doctors examining various medical photos including X-ray images, CT images, and MR images for diagnostic purposes.

**Brief Description of the Drawings**

Fig. 1 is a schematic explanatory view of a medical image displaying apparatus showing Embodiment 1 of the present invention;

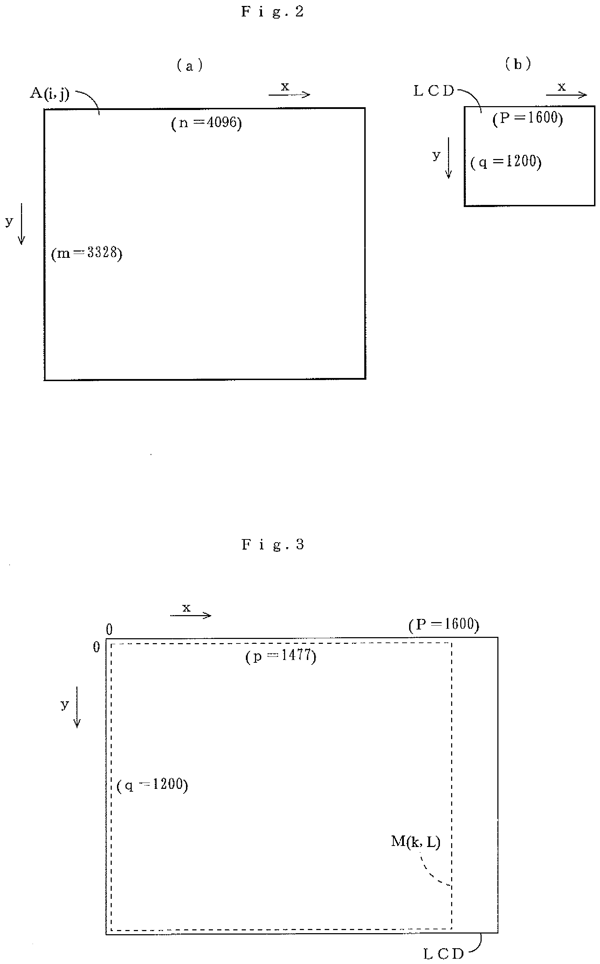

Fig. 2 is an explanatory view showing an array of pixels in a medical image data and an array of pixels on an LCD;
Fig. 3 is an explanatory view showing a reduced image on the LCD;
Fig. 4 is a partially enlarged view of sub pixels in the LCD;
Fig. 5 is a flowchart of steps of a medical image viewer processing action according to Embodiment 1;
Fig. 6 is a filowchart following that of Fig. 5;
Fig. 7 is an explanatory view showing an array of pixels in a medical image data and an array of pixels in its minor axially weighted average image;
Fig. 8 is an explanatory view of an action of calculating the minor axially weighted average;
Fig. 9 is an explanatory view of a minor axially linear interpolating action;
Fig. 10 is an explanatory view showing an array of pixels in the minor axially weighted average image and an array of pixels in its minor axially interpolated intermediate Image;
Fig. 11 is an explanatory view of a major axially linear interpolating action;
Fig. 12 is an explanatory view showing an array of pixels in the minor axially interpolated intermediate image and an array of pixels in the display image;
Fig. 13 is an explanatory view of an action of frequency enhancing the display image; and
Fig. 14 is an explanatory view showing an array of pixels in the display image and its actual display on the display screen.

**Description of Numerals**

1: Medical image displaying apparatus, 3: Personal computer, 4: Monochrome liquid crystal display, 31: Medical image viewer program.

**Claims**

1.  An image displaying apparatus, which maintains the aspect ratio of an original monochrome image, comprising: an image converting means adapted to convert original monochrome image data which consists of an array, m rows and n columns, of pixels into a display image which consists of an array, q rows and (3*n*q/m) columns, of pixels where m, n and q, are natural numbers and m≤n and m>q are given; and
    a monochrome liquid crystal display provided with a monochrome LCD composed of an array, of pixels of square shape, each pixel consisting of three rectangular sub pixels aligned along the row of monochrome LCD, for driving the sub pixels independently to display the display image data on the LCD,
    **characterized in that**;
    the image converting means comprises
    a weighted averaging means adapted to weighted average a plurality of adjacent pixel data of the original monochrome image data along the column direction and generate weighted average image data, so that m pixels along the column direction of the original monochrome image data is maintained;
    an interpolating and reducing means adapted to interpolate and reduce pixel data of the weighted average image data along the column direction, so that the weighted average image data having m pixels along the column direction is converted into interpolated intermediate image data having q pixels along the column direction; and
    an interpolating means adapted to interpolate pixel data of the interpolated intermediate image data along the row direction, so that the interpolated intermediate image data having n pixels along the row direction is converted into the display image data having (3*n*q/m) pixels along the row direction.

2. The image displaying apparatus according to claim 1,
wherein the interpolating and reducing means performs a linear interpolation which refers to adjacent two pixels along the column direction.

3. The image displaying apparatus according to claim 1 or 2,
wherein, when the image converting means reduces m rows to q rows by a reduction rate of m/q, the weighted averaging means performs weighted averaging which refers to an integer of pixels which is greater than the reduction rate along the column direction.

4. An image display program, which maintains the aspect ratio of an original monochrome image, for displaying original monochrome image data which consists of an array, m rows and n columns, of pixels on a monochrome LCD of a monochrome liquid crystal display which is composed of an array, of pixels of square shape, each pixel consisting of three rectangular sub pixels aligned along the row of monochrome LCD for driving the sub pixels independently to display display image data on the LCD where m,n and q, are natural numbers and m≤n and m>q are given, allowing a computer to act as:

an original monochrome image inputting means adapted to input the original monochrome image data from the outside;
an image converting means adapted to convert the original monochrome image data into display image data which consists of an array, q rows and (3*n*q/m) columns, of pixels; and
a display image outputting means adapted to output the display image data to the monochrome liquid crystal display in order to display the display image data through independently driving the sub pixels of the monochrome LCD,
**characterized in that**;
the image converting means comprises;
a weighted averaging means adapted to weighted average a plurality of adjacent pixel data of the original monochrome image data along the column direction and generate weighted average image data, so that m pixels along the column direction of the original monochrome image data is maintained;
an interpolating and reducing means adapted to interpolate and reduce pixel data of the weighted average image data along the column direction, so that the weighted average image data having m pixels along the column direction is converted into interpolated intermediate image data having q pixels along the column direction; and
an interpolating means adapted to interpolate pixel data of the interpolated intermediate image data along the row direction, so that the interpolated intermediate image data having n pixels along the row direction is converted into the display image data having (3*n*q/m) pixels along the row direction.

**Patentansprüche**

1. Bildanzeigevorrichtung, die das Seitenverhältnis eines Originalmonochrombildes beibehält, umfassend:

ein Bildumwandlungsmittel, das ausgelegt ist, Originalmonochrombilddaten, die aus einer Pixel-Matrix, - m Reihen und - n Spalten bestehen, in ein Anzeigebild umzuwandeln, das aus einer Pixel-Matrix, - q Reihen und - (3*n*q/m) Spalten besteht, worin m, n und q natürliche Zahlen, und m≤n und m>q vorgegeben sind; und
eine monochrome Flüssigkristallanzeige, die mit einer aus einer Matrix von Pixeln von quadratischer Form zusammengesetzten, monochromen LCD-Anzeige versehen ist, wobei jedes Pixel aus drei rechteckigen Subpixeln besteht, die entlang der Reihe der monochromen LCD-Anzeige zum unabhängigen Ansteuern der Subpixel ausgerichtet sind, um die Anzeigebilddaten auf der LCD-Anzeige anzuzeigen,
**dadurch gekennzeichnet, dass**:

das Bildumwandlungsmittel Folgendes umfasst:

ein gewichtetes Mittelwert-Mittel, das für das Bilden eines gewichteten Mittelwerts aus einer Vielzahl von benachbarten Pixeldaten der Originalmonochrombilddaten entlang der Spalten-Richtung und für das Erzeugen von gewichteten Mittelwertbilddaten ausgelegt ist, sodass m Pixel entlang der Spalten-Richtung der Originalmonochrombilddaten erhalten bleiben;

ein Interpolations- und Reduziermittel, das ausgelegt ist, Pixeldaten der gewichteten Mittelwertbilddaten entlang der Spalten-Richtung zu interpolieren und zu reduzieren, sodass die gewichteten Mittelwertbilddaten, welche m Pixel entlang der Spalten-Richtung aufweisen, in interpolierte Zwischenbilddaten, welche q Pixel entlang der Spalten-Richtung aufweisen, umgewandelt werden; und

ein Interpolationsmittel, das ausgelegt ist, Pixeldaten der interpolierten Zwischenbilddaten entlang der Reihen-Richtung zu interpolieren, sodass die interpolierten Zwischenbilddaten, welche n Pixel entlang der Reihen-Richtung aufweisen, in die Anzeigebilddaten, welche (3*n*q/m) Pixel entlang der Reihen-Richtung aufweisen, umgewandelt werden.

2. Bildanzeigevorrichtung gemäß Anspruch 1, worin das Interpolations- und Reduziermittel eine lineare Interpolation ausführt, die sich auf benachbarte zwei Pixel entlang der Spalten-Richtung bezieht.

3. Bildanzeigevorrichtung gemäß Anspruch 1 oder 2, worin, wenn das Bildumwandlungsmittel m Reihen in q Reihen durch eine Reduzierungsrate von m/q umwandelt, das gewichtete Mittelwert-Mittel die Bildung eines gewichteten Mittelwerts ausführt, die sich auf eine Ganzzahl von Pixeln bezieht, die größer als die Reduzierungsrate entlang der Spalten-Richtung ist.

4. Bildanzeigeprogramm, welches das Seitenverhältnis eines Originalmonochrombildes beibehält, um Originalmonochrombilddaten anzuzeigen, die aus einer Pixel-Matrix, - m Reihen und - n Spalten auf einer monochromen LCD-Anzeige einer monochromen Flüssigkristallanzeige bestehen, die sich aus einer Matrix von Pixeln von quadratischer Form zusammensetzt, wobei jedes Pixel aus drei rechteckigen Subpixeln besteht, die entlang der Reihe der monochromen LCD-Anzeige zum unabhängigen Ansteuern der Subpixel ausgerichtet sind, um Anzeigebilddaten auf der LCD-Anzeige anzuzeigen, worin m, n und q natürliche Zahlen, und m≤q vorgegeben sind, was bewirkt, dass ein Computer folgendermaßen funktioniert:

als ein Originalmonochrombild-Eingabemittel, das ausgelegt ist, die Originalmonochrombilddaten von außen einzugeben;

als ein Bildumwandlungsmittel, das ausgelegt ist, die Originalmonochrombilddaten in Anzeigebilddaten umzuwandeln, die aus einer Pixel-Matrix, - q Reihen und - (3*n*q/m) Spalten bestehen; und

als ein Anzeigebild-Ausgabemittel, das ausgelegt ist, die Anzeigebilddaten an die monochrome Flüssigkristallanzeige auszugeben, um die Anzeigebilddaten durch unabhängiges Ansteuern der Subpixel der monochromen LCD-Anzeige anzuzeigen,

**dadurch gekennzeichnet, dass**:

das Bildumwandlungsmittel Folgendes umfasst:

ein gewichtetes Mittelwert-Mittel, das für das Bilden eines gewichteten Mittelwerts aus einer Vielzahl von benachbarten Pixeldaten der Originalmonochrombilddaten entlang der Spalten-Richtung und für das Erzeugen von gewichteten Mittelwertbilddaten ausgelegt ist, sodass m Pixel entlang der Spalten-Richtung der Originalmonochrombilddaten erhalten bleiben;

ein Interpolations- und Reduziermittel, das ausgelegt ist, Pixeldaten der gewichteten Mittelwertbilddaten entlang der Spalten-Richtung zu interpolieren und zu reduzieren, sodass die gewichteten Mittelwertbildungsbilddaten, welche m Pixel entlang der Spalten-Richtung aufweisen, in interpolierte Zwischenbilddaten, welche q Pixel entlang der Spalten-Richtung aufweisen, umgewandelt werden; und

ein Interpolationsmittel, das ausgelegt ist, Pixeldaten der interpolierten Zwischenbilddaten entlang der Reihen-Richtung zu interpolieren, sodass die interpolierten Zwischenbilddaten, welche n Pixel entlang der Reihen-Richtung aufweisen, in die Anzeigebilddaten, welche (3*n*q/m) -Pixel entlang der Reihen-Richtung aufweisen, umgewandelt werden.

## Revendications

1. Appareil d'affichage d'image, qui maintient le rapport d'aspect d'une image monochrome d'origine, comprenant :

un moyen de conversion d'image adapté pour convertir des données d'image monochrome d'origine consistant en un réseau, m rangées et n colonnes, de pixels dans une image d'affichage qui consiste en un réseau, q rangées et (3*n*q/m) colonnes, de pixels où m, n et q sont des entiers naturels, et m ≤ n et m > q sont données ;
un dispositif d'affichage à cristaux liquides monochrome muni d'un LCD monochrome constitué d'un réseau, de pixels de forme carrée, chaque pixel étant constitué de trois sous-pixels rectangulaires alignés le long de la rangée de LCD monochrome, pour entraîner les sous-pixels indépendamment pour afficher les données d'image d'affichage sur le LCD,

**caractérisé en ce que** ;

le moyen de conversion d'image comprend

un moyen de moyennage pondéré adapté pour calculer une moyenne pondérée d'une pluralité de données de pixels adjacents des données d'image monochrome d'origine le long de la direction de colonne et générer des données d'image moyennes pondérées, de sorte que m pixels le long de la direction de colonne des données d'image monochrome d'origines sont maintenues ;

un moyen d'interpolation et de réduction adaptés pour interpoler et réduire des données de pixels des données d'image de moyenne pondérée le long de la direction de colonne, de sorte que les données d'image de moyenne pondérée ayant m pixels le long de la direction de colonne sont converties en des données d'image intermédiaires interpolées ayant q pixels le long de la direction de colonne ; et

un moyen d'interpolation adapté pour interpoler des données de pixels des données d'image intermédiaires interpolés le long de la direction de rangée, de sorte que les données d'image intermédiaires interpolées ayant n pixels le long de la direction de rangée sont converties en les données d'image d'affichage ayant (3*n*q/m) pixels le long de la direction de rangée.

2. Appareil d'affichage d'image selon la revendication 1, dans lequel les moyens d'interpolation et de réduction effectuent une interpolation linéaire qui se réfère à deux pixels adjacents le long de la direction de colonne.

3. Appareil d'affichage d'image selon la revendication 1 ou 2, dans lequel, lorsque le moyen de conversion d'image réduits m rangées à q rangées par un taux de réduction de m/q, le moyen de moyennage pondéré effectue un moyennage pondéré qui fait référence à un nombre entier de pixels qui est supérieur au taux de réduction le long de la direction de colonne.

4. Programme d'affichage d'image, qui maintient le rapport d'aspect d'une image monochrome d'origine, pour afficher des données d'image monochrome d'origine qui sont constituées d'un réseau, m rangées et n colonnes, de pixels sur un LCD monochrome d'un dispositif d'affichage à cristaux liquides monochrome qui est constitué d'un réseau, de pixels de forme carrée, chaque pixel étant constitué de trois sous-pixels rectangulaires alignés le long de la rangée de LCD monochrome pour entraîner les sous-pixels indépendamment pour afficher des données d'image d'affichage sur le LCD, où m, n et q sont des nombres entiers naturels et m ≤ n et m > q sont données, en permettant à un ordinateur d'agir comme :

un moyen d'entrée d'image monochrome d'origine adapté pour entrer les données d'image monochrome d'origine depuis l'extérieur ;

un moyen de conversion d'image adapté pour convertir les données d'image monochrome d'origine en données d'image d'affichage qui sont constituées d'un réseau, q rangée et (3*n*q/m) colonnes de pixels ; et

un moyen de délivrance en sortie d'image d'affichage adapté pour délivrer en sortie les données d'image d'affichage au dispositif d'affichage à cristaux liquides monochrome pour afficher les données d'image d'affichage par un entraînement indépendant des sous-pixels du LCD monochrome,

**caractérisé en ce que** ;

le moyen de conversion d'image comprend ;

un moyen de moyennage pondéré adapté pour calculer une moyenne pondérée d'une pluralité de données de pixels adjacents des données d'image monochrome d'origine le long de la direction de colonne et générer des données d'image de moyenne pondérée, de sorte que m pixel le long de la direction de colonne des données d'image monochrome d'origine sont maintenus ;

un moyen d'interpolation et de réduction adapté pour interpoler et réduire des données de pixels des données d'image de moyenne pondérée le long de la direction de colonne, de sorte que les données d'image de moyenne pondérée ayant m pixels le long de la direction de colonne sont converties en données d'image intermédiaires interpolées ayant q pixels le long de la direction de colonne ; et

un moyen d'interpolation adapté pour interpoler des données de pixels des données d'image intermédiaires interpolées le long de la direction de rangée, de sorte que les données d'image intermédiaires interpolées ayant n pixels le long de la direction de rangée sont converties en les données d'image d'affichage ayant (3*n*q/m) pixels le long de la direction de rangée.

F i g . 1

medical imaging appratus

(n)

(m)

F P D

monochrome image data
A(i,j)

(n)

(m)

D

medical image data server

personal computer    A(i,j)

3

3 1

medical image
viewer program

medical image displaying
apparatus

1

display image data
M(k,L)

(3 * n * q / m)

(q)

monochrome LCD

4

(P)

(q)

LCD

Fig. 2

(a)

A(i, j)

x →

(n = 4096)

y ↓

(m = 3328)

(b)

LCD

x →

(P = 1600)

y ↓

(q = 1200)

Fig. 3

x →

0       (P = 1600)

0

y ↓

(p = 1477)

(q = 1200)

M(k, L)

LCD

Fig. 4

F i g . 5

```
          ( medical image viewer process )
                        │
                        │           ┌ S 0
  ┌─────────────────────────────────────────────────┐
  │ read out the monochrome medical image data A(i,j) │
  └─────────────────────────────────────────────────┘
                        │           ┌ S 1
          ┌────────────────────────────────┐
          │ calculate a reduction rate  r y │
          │         r y＝m／q               │
          └────────────────────────────────┘
                        │           ┌ S 2
       ┌──────────────────────────────────────────┐
       │ calculate a minor axially weighted average  b │
       │         b ＝ (r y− 1) ＊B               │
       └──────────────────────────────────────────┘
                        │                   ┌ S 3
 ┌───────────────────────────────────────────────────────┐
 │  calculate a weighted average image data A'(i,j),      │
 │  where i=0, 1, ⋯, n-1,  j=0, 1, ⋯, m-1                 │
 │ A'(i,j)＝A(i,j-1)*b+A(i,j)*(1-2*b)+A(i,j+1)*b          │
 │  where A'(i, 0)＝A(i, 0), A'(i, m-1)＝A(i, m-1)         │
 └───────────────────────────────────────────────────────┘
                        │           ┌ S 4
                     ┌───────┐
                     │ i ＝ 0 │
                     └───────┘
                        │           ┌ S 5
                     ┌───────┐
                     │ L ＝ 0 │
                     └───────┘
                        │                   ┌ S 6
 ┌───────────────────────────────────────────────────────┐
 │ calculate a image reference coordinates j q            │
 │ with the LCD minor axial corrdinate L   j q＝int(L*r y) │
 └───────────────────────────────────────────────────────┘
                        │           ┌ S 7
        ┌──────────────────────────────────────────┐
        │ calculate a minor axial interpolation weight Wy(L) │
        │       Wy(L)＝(L*r y)− j q                 │
        └──────────────────────────────────────────┘
                        │                   ┌ S 8
 ┌───────────────────────────────────────────────────────┐
 │ calculate a minor axially interpolated intermediate image data C(i,L) │
 │ C(i,L)＝A'(i, j q)*(1−Wy(L))+A'(i, j q+1)*Wy(L)        │
 └───────────────────────────────────────────────────────┘
                        │           ┌ S 9
                     ┌─────────┐
                     │ L＝L＋1  │
                     └─────────┘
                        │           ┌ S 1 0
              no  ⟨ L ＝ q ? ⟩   L ＝0, 1, ∼, q−1
                        │ yes       ┌ S 1 1
                     ┌─────────┐
                     │ i ＝ i ＋1│
                     └─────────┘
                        │           ┌ S 1 2
              no  ⟨ i ＝ n ? ⟩   i ＝0, 1, ∼, n−1
                        │ yes
                      ( 1 )
```

F i g . 6

( 1 )

S 1 3

calculate the number p of pixels along the major axis on the LCD
$$p = n / r y$$

S 1 4

calculate a reduction rate r x along the major axis
$$r x = n / ( p * 3 )$$

S 1 5

k = 0

S 1 6

calculate a major axial image reference coordinate i p
corresponding to the major axial LCD coordinate k       $i p = int(k* r x)$

S 1 7

calculate a major axial interpolation weight Wx(k)
$$Wx(k) = (k* r x) - i p$$

S 1 8

L = 0

S 1 9

calculate a display image data M' (k,L)
$$M' (k,L) = C( i p,L)*( 1 - Wx(k)) + C( i p + 1,L)*Wx(k)$$

S 2 0

L = L + 1

S 2 1

L = q ?    $L = 0, 1, \sim, q - 1$

no

yes    S 2 2

k = k + 1

S 2 3

k = p * 3 ?    $k = 0, 1, \sim, p*3 - 1$

no

yes

S 2 4

frequency enhancing process to the display image data M' (k,L)
where k = 0, 1, ···, p*3 - 1,    L = 0, 1, ···, q - 1
$$M(k,L) = M' (k,L-1)*e + M' (k,L)*(1-2*e) + M' (k,L+1)*e$$
where M(k, 0) = M' (k, 0), M(k, q-1) = M' (k, q-1)

S 2 5

output the display image data M(k,L)

( end )

14

Fig. 7

Fig. 8

Fig. 9

F i g . 1 0

F i g . 1 1

F i g . 1 2

Ｆ ｉ ｇ ．  １３

0

$\xrightarrow{k}$

0                p*3－1

L↓   M' (k, L)   ⇒   L↓   M(k, L)

q-1

$\xrightarrow{k}$

0                p*3－1

Ｆ ｉ ｇ ．  １４

0

$\xrightarrow{k}$

0                p*3－1

L↓   M(k, L)   ⇒   y↓

q-1

$\xrightarrow{x}$ (P)

0

q-1

↑

p*3－1

**EP 2 500 899 B1**

**REFERENCES CITED IN THE DESCRIPTION**

**Patent documents cited in the description**

- JP 2003228337 A

- EP 1239447 A1